**Europäisches Patentamt**

**European Patent Office**

**Office européen des brevets**

(19)

(11) **EP 1 248 021 A1**

(12) **EUROPÄISCHE PATENTANMELDUNG**

(43) Veröffentlichungstag:
09.10.2002 Patentblatt 2002/41

(51) Int Cl.$^7$: **F16H 61/02**, B60K 41/06

(21) Anmeldenummer: 02004820.3

(22) Anmeldetag: 02.03.2002

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **06.04.2001 DE 10117162**

(71) Anmelder: **Bayerische Motoren Werke Aktiengesellschaft**
**80809 München (DE)**

(72) Erfinder:
• **Fuchs, Emanuel**
  **85777 Fahrenzhausen (DE)**
• **Hezel, Rainer**
  **80796 München (DE)**

(54) **Elektronische Getriebeeinheit zur Gangwechselsteuerung in einem Kraftfahrzeug**

(57) Bei einer elektronischen Getriebeeinheit zur Gangwechselsteuerung in einem Kraftfahrzeug, die mit einer elektronischen Motoreinheit zur Steuerung einer Brennkraftmaschine verbunden ist, ermittelt die Getriebeeinheit das einem vorgegebenen Zugkraftwunsch zugehörige Motormoment sowie das von der Motoreinheit einstellbare Motormoment bei vorliegendem Gang. Die Getriebeeinheit nimmt, wenn das dem vorgegebenen Zugkraftwunsch zugehörige Motormoment bei vorliegendem Gang nicht einstellbar ist, einen Gangwechsel vor, wenn im neuen Gang ein Motormoment einstellbar ist, das dem dem vorgegebenen Zugkraftwunsch zugehörige Motormoment näher kommt als das im vorliegenden Gang einstellbaren Motormoment.

Fig. 2

**Beschreibung**

Die Erfindung betrifft eine elektronische Getriebeeinheit zur Gangwechselsteuerung in einem Kraftfahrzeug nach dem Oberbegriff des Patentanspruchs 1.

Eine derartige Getriebesteuereinheit ist insbesondere in Form eines eigenständigen Getriebe-Steuergeräts seit langem bekannt. Zum technischen Umfeld wird beispielsweise auf die EP 0 471 102 B1 hingewiesen. Zur Gangwechselsteuerung werden hierbei sogenannte Schaltkennlinien im Getriebe-Steuergerät abgespeichert, die abhängig von der Getriebeabtriebsdrehzahl und von der Fahrpedalstellung einen bestimmten Gang fest vorgeben. Die Getriebeabtriebsdrehzahl ist ein Maß für die Fahrzeuggeschwindigkeit. Die Fahrpedalstellung korrespondiert direkt mit der Motorlast bzw. mit dem abgegebenen Motormoment, wenn wie beim Stand der Technik das Fahrpedal direkt die Stellung eines Drosselklappenwinkels vorgibt. Für verschiedene Fahrsituationen, wie z. B. Bergfahrt oder Sportprogramm, werden verschiedene Schaltkennlinienfelder abgespeichert. Dies erfordert zum einen eine hohe Speicherkapazität (für derzeit bis zu 20 Schaltkennfelder) in den Steuergeräten als auch einen hohen Abstimmungs- und Wartungsaufwand bei der Entwicklung und Serienbetreuung von Fahrzeugen mit elektronisch gesteuerten Automatikgetrieben.

Die Verbindung zwischen der elektronischen Getriebeeinheit in Form des Getriebesteuergeräts und einer elektronischen Motoreinheit in Form eines Brennkraftmaschinensteuergeräts besteht beim Stand der Technik beispielsweise aus einer bidirektionalen Kommunikationsleitung (z. B. CAN-Bus). Die Getriebeeinheit und die Motoreinheit können auch als unterschiedliche Funktionsblöcke in einem einzigen Steuergerät zusammengefasst sein.

Es ist Aufgabe der Erfindung, eine effiziente Gangwechselsteuerung zu schaffen, durch die Speicherplatz gespart und der Abstimmungsaufwand reduziert wird.

Diese Aufgabe wird durch die Merkmale des Patentanspruchs 1 gelöst. Vorteilhafte Weiterbildungen der Erfindung sind die Gegenstände der abhängigen Patentansprüche.

Eine elektronische Getriebeeinheit ist mit einer elektronischen Motoreinheit, z. B. in Form eines gemeinsamen Steuergeräts und/oder in Form einer gemeinsamen Datenbusleitung, verbunden. Erfindungsgemäß ermittelt die Getriebeeinheit, das einem vorgegebenen Zugkraftwunsch zugehörige Soll-Motormoment bei vorliegendem Gang und fordert dieses Soll-Motormoment z.B. von der Motoreinheit an. Der vorgegebenen Zugkraftwunsch kann eine Zugkrafterhöhung oder eine Zugkraftreduzierung sein. Der Zugkraftwunsch wird beispielsweise über die Fahrpedalstellung oder über Regelsysteme z. B. zur Brems- und/oder Fahrgeschwindigkeitsregelung ermittelt. Entsprechend einer Zugkrafterhöhung oder einer Zugkraftreduzierung ist das Soll-Motormoment entweder ein positives Moment (Zugmoment) oder ein negatives Moment (Schleppmoment).

Beispielsweise gibt die Motoreinheit an die Getriebeeinheit entweder eine Information über das eingestellte Motormoment oder, wenn das angeforderte (Soll-) Motormoment nicht erreicht werden kann, eine Information zumindest über das einstellbare Motormoment aus. Das einstellbare Motormoment ist vorzugsweise das maximal mögliche (bei angefordertem Zugmoment) bzw. das minimal mögliche (bei angefordertem Schleppmoment) einstellbare Motormoment. Die Information über das einstellbare Motormoment kann beispielsweise das einstellbare Motormoment selbst in Form eines absoluten Wertes oder das einstellbare Motormoment im Vergleich mit dem angeforderten Motormoment in Form eines Differenzwertes (absoluter Wert) oder in Form eines Verhältniswertes (relativer Wert in [%]) sein. Die Getriebeeinheit kann jedoch auch selbst das einstellbare Motormoment ermitteln, wenn ihr die Information über die Motormomentkennlinien in Abhängigkeit von den verschiedenen Gängen und von der Motordrehzahl bzw. der Fahrzeuggeschwindigkeit bekannt ist.

Wenn das dem vorgegebenen Zugkraftwunsch zugehörige (Soll-) Motormoment bei vorliegendem Gang nicht einstellbar ist, nimmt die Getriebeeinheit einen Gangwechsel (Rückschaltung oder Hochschaltung) vor, falls das Verhältnis der Übersetzung des neuen Ganges zur Übersetzung des vorliegenden Ganges zumindest innerhalb eines vorgegebenen Toleranzbereiches entweder dem Verhältnis des angeforderten Motormoments zum im vorliegenden Gang einstellbaren Motormoment oder dem Verhältnis des angeforderten Motormoments zum im neuen Gang einstellbaren Motormoment entspricht. In der ersten Alternative wird vorausgesetzt, dass das im neuen Gang für den Zugkraftwunsch erforderliche Motormoment von der Motoreinheit einstellbar ist. In der zweiten Alternative wird alternativ oder zusätzlich ein Blick in die Zukunft geworfen, ob das im neuem Gang für den Zugkraftwunsch erforderliche Motormoment einstellbar ist.

Vorzugsweise wird die Information über das einstellbare Motormoment von der Motoreinheit an die Getriebeeinheit in Form eines relativen Wertes ausgegeben, der das Verhältnis des angeforderten Motormoments zum im vorliegenden oder neuen Gang einstellbaren, insbesondere maximal bzw. minimal möglichen Motormoment, wiedergibt.

Der vorgegebene Toleranzbereich wird vorzugsweise in Form eines Auslegungsfaktors bestimmt, der in einer Formel zur Gangwechselentscheidung unter Berücksichtigung der erfindungsgemäßen Bedingungen integriert ist.

Die Erfindung beschreibt also ein Verfahren, bei dem der Zusammenhang zwischen Betriebspunkt des Fahrzeugs und zugehöriger Übersetzung eines Automatikgetriebes nicht in Form der sogenannten Schaltkennlinien abgelegt ist, sondern im Sinne eines Antriebsmanagements zwischen Motor und Getriebe auf Basis der vom Fahrer über das Fahrpedal oder der von einem kraftfahrzeuginternen anderen Regelsystem (Bremsregelsystem, (abstandsgeregelter) Tempomat, usw.) angeforderten Zugkraft eingeregelt wird.

Effekt der Maßnahme ist eine wesentliche Reduzierung der Datenspeicherung im Steuergerät sowie ein in erhöhtem Maß reduzierter Applikationsaufwand. Eine Differenzierung der Schaltpunktauslegung nach Motor-, Fahrzeug-, Ländervarianten usw. entfällt.
Die Maßnahme ist Basis für ein effizientes Antriebsmanagement nicht zuletzt im Sinne kundenrelevanter Verbrauchsreduzierung.

Voraussetzungen:

Das Fahrpedal signalisiert einen Zugkraftwunsch alternativ zum Stellen eines Motormoments über die Vorgabe eines Drosselklappenwinkels. D.h., das Fahrpedal ist grundsätzlich von der Drosselklappe oder einem anderen Leistungssteuerorgan mechanisch entkoppelt. Die Fahrpedalstellung wird als elektrisches Signal, z. B. über ein Potentiometer am Fahrpedal, erfasst. (Die Drosselklappensteuerung durch das Fahrpedal kann als redundanter Pfad für eine Anwendung im Fehlerfall erhalten bleiben.)

Jeder Fahrpedalstellung wird ein Zugkraftwunsch zugeordnet. Ein Zugkraftwunsch kann beispielsweise auch von einem Fahrgeschwindigkeitsregelsystem vorgegeben werden. Der Empfänger des Zugkraftwunsches ist die elektronische Getriebeeinheit, z. B. in Form eines Getriebesteuergeräts.

In der Zeichnung ist ein Ausführungsbeispiel der Erfindung dargestellt. Es zeigt

Fig. 1 ein Blockschaltbild zur Veranschaulichung einer zur Durchführung der Erfindung möglichen Vorrichtung

Fig. 2 maximal mögliche Zugkraftkurven abhängig von der Fahrzeuggeschwindigkeit und dem gewählten Gang.

Fig. 3 ein möglicher Zusammenhang zwischen der Zuordnung eines Fahrpedalwinkels zu einem Zugkraftwunsch

Fig. 4 die Abhängigkeit des einstellbaren (hier maximal möglichen) Motormoments abhängig von der Drehzahl der Brennkraftmaschine

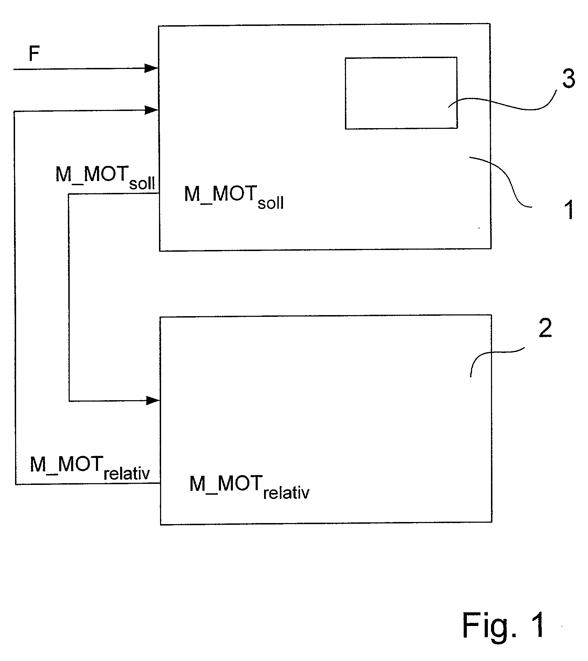

In Fig. 1 ist eine elektronische Getriebeeinheit 1 zur Gangwechselsteuerung in einem Kraftfahrzeug über mindestens eine Kommunikationsleitung mit einer elektronischen Motoreinheit zur Steuerung einer Brennkraftmaschine verbunden. Die Getriebeeinheit 1 weist einen Speicher 3 auf und erhält als Eingangssignal einen Zugkraftwunsch F. Im ff. wird das Ausführungsbeispiel insbesondere an Hand eines Zugkrafterhöhungswunsches über das Fahrpedal FP erläutert. Analoges gilt für einen Zugkraftreduzierungswunsch.

Die Getriebeeinheit 1 ermittelt das dem vorgegebenen Zugkraftwunsch F zugehörige Motormoment $M\_MOT_{soll}$ (positives Moment, da Zugkrafterhöhung) bei vorliegendem Gang ($i_{alt}$) und fordert dieses von der Motoreinheit 2 an. Die Motoreinheit 2 gibt an die Getriebeeinheit 1 eine Information $M\_MOT_{relativ}$ über das eingestellte Motormoment in Form des Verhältnisses des angeforderten Motormoments zum im vorliegenden und/oder neuen Gang eingestellten Motormoments aus. (Alternativ kann z.B. auch nur das eingestellte (Ist-) Motormoment, die Drehzahlabhängigkeit des einstellbaren Motormoments für die einzelnen Gänge oder das im vorliegenden Gang sowie das im neuen Gang einstellbare Motormoment von der Motoreinheit 2 an die Getriebeeinheit 1 weitergeleitet werden.)

Ist das eingestellte Motormoment nicht gleich dem angeforderten Motormoment, da das angeforderte Motormoment nicht einstellbar ist, entspricht das eingestellte Motormoment vorzugsweise dem maximal (da Zugkrafterhöhung) möglichen Motormoment. Wenn das eingestellte Motormoment kleiner als das angeforderte Motormoment ist, nimmt die Getriebeeinheit 1 einen Gangwechsel ($i_{alt}$ nach $i_{neu}$) (z. B. Zugrückschaltung bei Zugkrafterhöhungswunsch) vor, wenn das Verhältnis ($i_{neu}/i_{alt}$) der Übersetzung des neuen Ganges ($i_{neu}$) zur Übersetzung des vorliegenden Ganges ($i_{alt}$) zumindest innerhalb eines vorgegebenen Toleranzbereiches dem Verhältnis ($M\_MOT_{relativ}$) des angeforderten Motormoments ($M\_MOT_{soll}$) zum im vorliegenden Gang ($i_{alt}$) und/oder zum im neuen Gang ($i_{neu}$) maximal (bei Zugkrafterhöhung) einstellbaren Motormoment ($M\_MOT_{Gang\ alt}$ und/oder $M\_MOT_{Gang\ alt}$) entspricht.

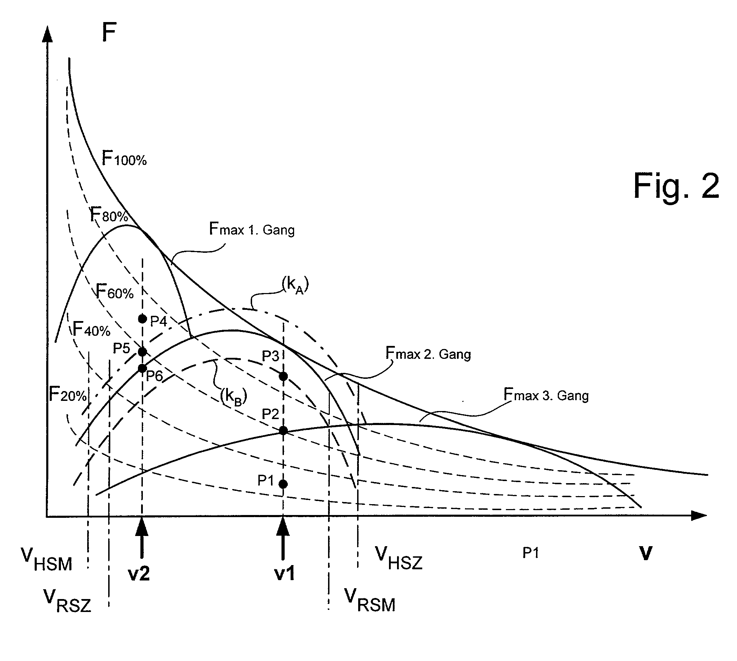

Zur genaueren Erläuterung der Erfindung werden im ff. Fallbeispiele anhand von in der Getriebeeinheit 1 verwendbaren Formeln auch unter Bezugnahme auf Fig. 2 genannt:

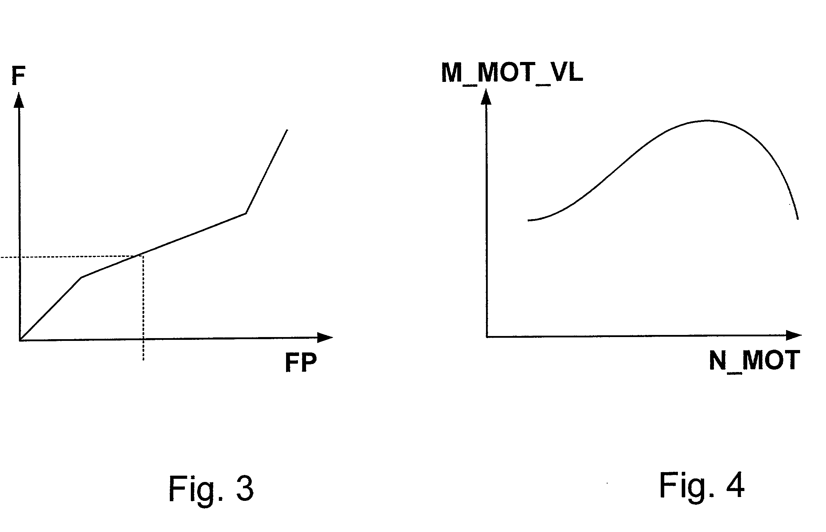

1) der Fahrer kommuniziert mittels dem Fahrpedal FP einen Zugkraftwunsch F an die Getriebeeinheit (mögliche Zuordnung vgl. Fig. 3).

a. Die (interpolierte) Grenzkurve $F_{100\%}$ der positiven Zugkraft F ist im einfachen Fall durch die bekannte maximale Kurbelwellenleistung $P_{max}$ des Motors in Abhängigkeit von der Fahrzeuggeschwindigkeit v gegeben
(Zugkrafthyperbel: $F_{100\%}(v) = P_{max} / v$),
b. genauer ergibt sie sich bei bekanntem Verlauf des Volllast-Moments des Motors abschnittsweise aus den Zugkraftkurven ($F_{max\ 1.Gang}, ... \ F_{max\ 3.Gang}$) der einzelnen Gangübersetzungen i. Die Zugkraftkurven $F_{max\ 1.Gang}, F_{max\ 2.Gang}, F_{max3.Gang}$ sind Kurven maximaler Zugkraft im den einzelnen Gängen (vgl. Fig. 2).

c. Die Grenzkurve der negativen Zugkraft ergibt sich analog aus dem bekannten Schleppmoment des Motors und der jeweiligen Übersetzung im Antriebsstrang innerhalb deren Reichweiten auf der Geschwindigkeitsachse (in Fig. 2 nicht dargestellt).

d. Die maximal mögliche Zugkraft wird bei einer gegebenen Geschwindigkeit v mit +100% bei positiver Zugkraft (Zugkrafterhöhungswunsch) und mit -100% bei negativer Zugkraft (Zugkraftreduzierungswunsch) angenommen.

e. Für Auslegungszwecke kann eine beliebige geschwindigkeitsabhängige Übertragungsfunktion zwischen Fahrpedalwinkel FP und Zugkraftanforderung F eingestellt werden (Beispiel Fig. 3).

2) Die Getriebeeinheit kalkuliert online auf der Basis der aktuellen Übersetzung $i_{Gesamt}$ aus Gang, Wandler und Hinterachse sowie des dynamischen Radradius $r_{dyn}$ das zur Erfüllung der Zugkraftanforderung (X%) einzustellende Motormoment $M\_MOT_{soll}$ und fordert dieses diskret von der Motoreinheit 2 an:

$$M\_MOT_{soll} = x\% * F_{100\%}(V) * i_{Gesamt} * r_{dyn}$$

mit: $F_{100\%}(v) = k * P_{max} / v$
(mit $P_{max}$=maximal mögliche Motorleistung im vorliegenden Gang)

3) Die Motoreinheit 2 stellt dieses Motormoment im Rahmen seiner Möglichkeiten und meldet der Getriebeeinheit 1 den relativen Wert des geforderten Moments bezogen auf das eingestellte $M\_MOT_{relativ}$ in % zurück.

Grundsätzlich werden bei positiver Zugkraftanforderung sog. Zugschaltungen und bei negativer Zugkraftanforderung sog. Schubschaltungen durchgeführt. Dies gilt sowohl für Rück- als auch für Hochschaltungen.

4) Die Getriebeeinheit hat grundsätzlich das Bestreben, die jeweils längste mögliche Übersetzung zu schalten. Das Getriebe wird demnach hochgeschaltet, wenn der rückgemeldete relative Wert des geforderten Motormoments $M\_MOT_{relativ}$ kleiner (im Schubbetrieb größer) ist als 100% multipliziert mit dem möglichen Gangsprungfaktor:

$$M\_MOT_{relativ} < 100\% * i_{neu} / i_{alt} * k_A$$

für Zughochschaltungen bzw.

$$M\_MOT_{relativ} > -100\% * i_{neu} / i_{alt} * kA$$

für Schubhochschaltungen,
mit $M\_MOT_{relativ} = M\_MOT_{soll} / M\_MOT_{Gang\,alt}$
wobei $M\_MOT_{Gang\,alt}$ das maximal (bei positiver Zugkraftanforderung) bzw. minimal (bei negativer Zugkraftanforderung) mögliche Motormoment im vorliegenden Gang ($i_{alt}$) ist und
wobei $k_A$ ein Auslegungsfaktor zur Toleranzbereichfestlegung bei Hochschaltungen ist. Durch diesen einzigen Faktor können auch abhängig von verschiedenen Fahrsituationen Schaltpunktverschiebungen vorgenommen werden, die bei Verwendung von Schaltkennlinien nach dem Stand der Technik jeweils durch ein eigenes Kennfeld realisiert wurden.

5) Das Getriebe schaltet zusätzlich oder alternativ zu Punkt 4) hoch, wenn das Verhältnis aus angefordertem Moment zum einstellbaren (z. B. motordrehzahlabhängigen) Moment nach einer Hochschaltung einem Übersetzungssprung ähnlich ist.

Im Unterschied zu den Formeln in Punkt 4) ist hierbei:

$$M\_MOT_{relativ} = M\_MOT_{soll} / M\_MOT_{Gang\,neu},$$

wobei $M\_MOT_{Gang\,neu}$ das maximal bzw. minimal mögliche Motormoment im neuen Gang ist, wenn ein Gangwechsel (hier Hochschaltung) ausgeführt werden würde.

Die Getriebeeinheit schaut somit auch in die Zukunft, ob der Gangwechsel tatsächlich zur gewünschten Zugkraft führen würde. Hintergrund ist die Abhängigkeit des maximal möglichen Motormoments (Volllast-Moment $M\_MOT\_VL$) von der Motordrehzahl $N\_MOT$ (vgl. Fig. 4).
Hierbei muss vorausgesetzt werden, dass der Getriebeeinheit 1 der Verlauf der Motorvollastkurve $M\_MOT\_VL$ bekannt ist oder dass beispielsweise die Zugkraftkurven F (v) aus Fig. 2 in der Getriebeeinheit 1 abgespeichert sind.

6) Das Getriebe schaltet um einen oder mehrere Gänge zurück, wenn der rückgemeldete relative Wert des Motormoments $M\_MOT_{relativ}$ größer (bei positiver Zugkraftanforderung) bzw. kleiner (bei negativer Zugkraftanforderung) ist als 100% multipliziert mit dem möglichen Gangsprungfaktor $i_{neu}/i_{alt}$:

$$M\_MOT_{relativ} > 100\% * i_{neu} / i_{alt} * k_B$$

für Zugrückschaltungen bzw.

$$M\_MOT_{relativ} < -100\% * i_{neu} / i_{alt} * k_B$$

für Schubrückschaltungen,
wobei $M\_MOT_{relativ} = M\_MOT_{soll} / M\_MOT_{Gang\ alt}$ und
wobei $k_B$ der Auslegungsfaktor zur Toleranzbereichfestlegung bei Rückschaltungen ist.

7) zusätzlich oder alternativ zu Punkt 6) schaltet das Getriebe in Analogie zu Punkt 5) zurück, wenn das Verhältnis aus angefordertem Motormoment ($M\_MOT_{soll}$) und im neuen Gang einstellbaren Motormoment ($M\_MOT_{Gang\ neu}$) einem Übersetzungssprung ähnlich ist. Die Getriebeeinheit 1 schaut somit auch hier in die Zukunft, ob der Gangwechsel tatsächlich zur gewünschten Zugkraft führen würde. Hintergrund ist auch hier die Abhängigkeit des maximal möglichen Motormoments (Volllast-Moment M_MOT_VL) von der Motordrehzahl N_MOT (vgl. Fig. 4). Insbesondere bei einer Rückschaltung kann demnach durch Erhöhung der Motordrehzahl N_MOT eine Abnahme des maximal möglichen Motormoments M_MOT_VL führen, wodurch ggf. die angeforderte Zugkrafterhöhung auch bei einer Rückschaltung nicht erfüllt werden kann.

Im Unterschied zu den Formeln in Punkt 6) ist hierbei:

$$M\_MOT_{relativ} = M\_MOT_{soll} / M\_MOT_{Gang\ neu},$$

wobei $M\_MOT_{Gang\ neu}$ das maximal (bei positiver Zugkraftanforderung) bzw. minimal (bei negativer Zugkraftanforderung) mögliche Motormoment im neuen Gang ($i_{neu}$) ist, wenn ein Gangwechsel (hier Rückschaltung) ausgeführt werden würde.

8) Damit die Motordrehzahl nicht kleiner als die Leerlaufdrehzahl wird und somit der Motor nicht "abgewürgt" werden kann, ist in der Getriebeeinheit vorzugsweise ein erstes Kennfeld abgelegt, das für jeden Gang abhängig von weiteren Betriebsparametern

    a. eine Geschwindigkeitsschwelle bzw. Motordrehzahlschwelle angibt, oberhalb der hochgeschaltet werden darf (Beispiel in Fig. 2: Geschwindigkeitsgrenze $v_{HSM}$ für Hochschaltmöglichkeit vom 1. Gang in den 2. Gang) und
    b. eine Geschwindigkeitsschwelle bzw. Motordrehzahlschwelle angibt, unterhalb der zurückgeschaltet werden muss (Beispiel in Fig. 2: Geschwindigkeitsgrenze $v_{RSZ}$ für Rückschaltzwang vom 2. Gang in den 1. Gang)

9) Damit die Motordrehzahl nicht größer als die Abregeldrehzahl (maximal zulässige Drehzahl) wird und somit der Motor nicht "überdreht" werden kann, ist in der Getriebeeinheit ein zweites Kennfeld abgelegt, das für jeden Gang abhängig von weiteren Betriebsparametern

    a. eine Geschwindigkeitsschwelle bzw. Motordrehzahlschwelle angibt, oberhalb der hochgeschaltet werden muss (Beispiel in Fig. 2: Geschwindigkeitsgrenze $v_{HSZ}$ für Hochschaltzwang vom 2. Gang in den 3. Gang) und
    b. eine Geschwindigkeitsschwelle bzw. Motordrehzahlschwelle angibt, oberhalb der nicht zurückgeschaltet werden darf (Beispiel in Fig. 2: Geschwindigkeitsgrenze $v_{RSM}$ für Rückschaltmöglichkeit vom 3. Gang in den 2. Gang).

10) Alle bisher unter der Bezeichnung Adaptive Getriebesteuerung bekannten Funktionen können in überarbeiteter Form der beschriebenen Logik überlagert werden. Funktionalitäten wie Berg/Anhängerbetrieb oder (abstandsgeregelter) Fahrgeschwindigkeitsregelbetrieb können stark vereinfacht abgewickelt werden.

Abschließend werden für zwei unterschiedliche Geschwindigkeiten v1 und v2 (siehe Pfeile) im Zusammenhang mit Fig. 2 praktische Beispiele aufgeführt.

Beispiel zu v1:

- P1: Ausgangssituation: Der vorliegende Gang sei der 3. Gang bei einer Konstantfahrt mit einer Zugkraftanforderung F von ca. 35%.
- P2: ein Zugkrafterhöhungswunsch bis zu F=60% kann im 3. Gang noch umgesetzt werden (vgl. Verlauf der maximal möglichen Zugkraft im 3. Gang: $F_{max\ 3.\ Gang}$)
- eine Zugkraftanforderung F zwischen 60% und ca. 85% kann zwar nicht umgesetzt werden, führt aber noch zu keiner Rückschaltung vom 3. Gang in den 2. Gang; denn der Toleranzbereich für diese Rückschaltung beginnt erst mit der gestrichelten Kurve, definiert durch den Auslegungsfaktor $k_B$.
- P3: eine Zugkraftanforderung ab 85% (bis 100%) führt zu einer Rückschaltung vom 3. Gang in den 2. Gang.

Beispiel zu v2:

- P4: Ausgangssituation: Eine Zugkraftanforderung F von über 60% kann nur im 1. Gang umgesetzt werden.
- P5: Eine Zugkraftanforderung von knapp unter 60% kann im 2. Gang noch nicht ganz umgesetzt werden (vgl. Verlauf der maximal möglichen Zugkraft im 2. Gang: $F_{max\ 2.\ Gang}$). Dennoch wird durch den mittels des Auslegungsfaktors $k_A$ definierten Toleranzbereich (unterhalb der strichpunktierten Kurve) eine Hochschaltung vom 1. Gang in den 2. Gang durchgeführt.

- P6: Eine Zugkraftanforderung F von kleiner ca. 55% kann im 2. Gang umgesetzt werden.

Wenn der Getriebeeinheit 1 die in Fig. 2 dargestellten Zugkraftkurven bekannt sind, ist eine Information von der Motoreinheit nicht nötig. Die Kurven maximaler Zugkraft in den einzelnen Gängen ($F_{max\ 1.\ Gang}$, $F_{max\ 2.\ Gang}$, $F_{max\ 3.\ Gang}$) entsprechen dem jeweils (hier maximal) einstellbaren Motormoment in den einzelnen Gängen ($M\_MOT_{Gang\ alt}$, $M\_MOT_{Gang\ neu}$) bei gegebener Fahrzeuggeschwindigkeit v. Die Zukraftkurven $F_{20\%}$ bis $F_{100\%}$ deuten die Bereiche eines möglichen Zugkraftwunsches F an, durch den ein zugehöriges Soll-Motormoment ($M\_MOT_{soll}$) vorgegeben wird. Die Kurven maximaler Zugkraft in den einzelnen Gängen ($F_{max\ 1.\ Gang}$, $F_{max\ 2.\ Gang}$, $F_{max\ 3.\ Gang}$) geben gleichzeitig die optimalen Hoch- bzw Rückschaltschwellen ohne Toleranzbereich an. Wenn jedoch die Zugkraftkurven nach Fig. 2 in der Getriebeeinheit 1 nicht abgespeichert sind, richten sich die Gangwechsel insbesondere nach den Formeln gemäß den oben genannten Punkten 4) bis 7).

## Patentansprüche

1. Elektronische Getriebeeinheit zur Gangwechselsteuerung in einem Kraftfahrzeug, die mit einer elektronischen Motoreinheit zur Steuerung einer Brennkraftmaschine verbunden ist, **dadurch gekennzeichnet, dass** die Getriebeeinheit (1) das einem vorgegebenen Zugkraftwunsch (F) zugehörige Motormoment ($M\_MOT_{soll}$) sowie das von der Motoreinheit (2) einstellbare Motormoment ($M\_MOT_{Gang\ alt}$) bei vorliegendem Gang ($i_{alt}$) ermittelt und dass die Getriebeeinheit (1), wenn das dem vorgegebenen Zugkraftwunsch (F) zugehörige Motormoment ($M\_MOT_{soll}$) bei vorliegendem Gang ($i_{alt}$) nicht einstellbar ist, einen Gangwechsel ($i_{alt}$ nach $i_{neu}$) vornimmt, wenn im neuen Gang ein Motormoment einstellbar ist, das dem dem vorgegebenen Zugkraftwunsch zugehörige Motormoment näher kommt als das im vorliegenden Gang ($i_{alt}$) einstellbaren Motormoment ($M\_MOT_{Gang\ alt}$).

2. Elektronische Getriebeeinheit zur Gangwechselsteuerung in einem Kraftfahrzeug, die mit einer elektronischen Motoreinheit zur Steuerung einer Brennkraftmaschine verbunden ist, **dadurch gekennzeichnet. dass** die Getriebeeinheit (1) das einem vorgegebenen Zugkraftwunsch (F) zugehörige Motormoment ($M\_MOT_{soll}$) sowie das von der Motoreinheit (2) einstellbare Motormoment ($M\_MOT_{Gang\ alt}$) bei vorliegendem Gang ($i_{alt}$) ermittelt und dass die Getriebeeinheit (1), wenn das dem vorgegebenen Zugkraftwunsch (F) zugehörige Motormoment ($M\_MOT_{soll}$) bei vorliegendem Gang ($i_{alt}$) nicht einstellbar ist, einen Gangwechsel ($i_{alt}$ nach $i_{neu}$) vornimmt, falls das Verhältnis ($i_{neu}/i_{alt}$) der Übersetzung des neuen Ganges ($i_{neu}$) zur Übersetzung des vorliegenden Ganges ($i_{alt}$) zumindest innerhalb eines vorgegebenen Toleranzbereiches entweder dem Verhältnis ($M\_MOT_{relativ}$) des angeforderten Motormoments ($M\_MOT_{soll}$) zum im vorliegenden Gang ($i_{alt}$) einstellbaren Motormoment ($M\_MOT_{Gang\ alt}$) entspricht oder dem Verhältnis ($M\_MOT_{relativ}$) des angeforderten Motormoments ($M\_MOT_{soll}$) zum im neuen Gang einstellbaren Motormoment ($M\_MOT_{Gang\ neu}$) entspricht.

3. Getriebeeinheit nach Patentanspruch 1 oder 2, **dadurch gekennzeichnet, dass** die Information über das einstellbare Motormoment von der Motoreinheit an die Getriebeeinheit in Form eines relativen Wertes ($M\_MOT_{relativ}$ [%]) ausgegeben wird, der das Verhältnis des angeforderten Motormoments ($M\_MOT_{soll}$) zum einstellbaren, insbesondere maximal bzw. minimal möglichen Motormoment ($M\_MOT_{Gang\ alt}$ oder $M\_MOT_{Gang\ neu}$), wiedergibt.

4. Getriebeeinheit nach einem der Patentansprüche 1 bis 3, **dadurch gekennzeichnet, dass** der Toleranzbereich jeweils durch einen Auslegungsfaktor ($k_A$ , $k_B$) bestimmt wird.

Fig. 1

EP 1 248 021 A1

Fig. 2

EP 1 248 021 A1

EP 1 248 021 A1

**F**

**FP**

Fig. 3

**M_MOT_VL**

**N_MOT**

Fig. 4

**Europäisches Patentamt**

# EUROPÄISCHER RECHERCHENBERICHT

Nummer der Anmeldung

EP 02 00 4820

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 199 21 937 A (FRAUNHOFER GES FORSCHUNG) 18. Januar 2001 (2001-01-18) * Spalte 5; Ansprüche 1-6; Abbildungen 1-5 * | 1,2,4 | F16H61/02 B60K41/06 |
| X | DE 196 42 647 A (VOLKSWAGENWERK AG) 2. Oktober 1997 (1997-10-02) * Ansprüche 1,2,4,14-20,22-24; Abbildungen 1-6 * | 1,3 | |
| X | EP 0 899 149 A (HONDA MOTOR CO LTD) 3. März 1999 (1999-03-03) * das ganze Dokument * | 1,4 | |
| A | WO 01 02210 A (FIAT RICERCHE ;PORTA ATTILIO (IT); ELLENA GIOVANNI (IT); LUPO MASS) 11. Januar 2001 (2001-01-11) * Seite 16 – Seite 17; Abbildung 5 * | 1,2 | |
| A | DE 26 25 770 A (DAIMLER BENZ AG) 15. Dezember 1977 (1977-12-15) * das ganze Dokument * | 1,2 | RECHERCHIERTE SACHGEBIETE (Int.Cl.7) F16H B60K |

Der vorliegende Recherchenbericht wurde für alle Patentansprüche erstellt

| Recherchenort | Abschlußdatum der Recherche | Prüfer |
|---|---|---|
| MÜNCHEN | 14. Mai 2002 | Vogt-Schilb, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                EP 02 00 4820

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-05-2002

| Im Recherchenbericht angeführtes Patentdokument | | | Datum der Veröffentlichung | Mitglied(er) der Patentfamilie | | Datum der Veröffentlichung |
|---|---|---|---|---|---|---|
| DE | 19921937 | A | 18-01-2001 | DE | 19921937 A1 | 18-01-2001 |
| DE | 19642647 | A | 02-10-1997 | DE | 19642647 A1 | 02-10-1997 |
|  |  |  |  | CN | 1184740 A | 17-06-1998 |
| EP | 0899149 | A | 03-03-1999 | JP | 11059233 A | 02-03-1999 |
|  |  |  |  | CA | 2245500 A1 | 27-02-1999 |
|  |  |  |  | EP | 0899149 A2 | 03-03-1999 |
|  |  |  |  | US | 6141615 A | 31-10-2000 |
| WO | 0102210 | A | 11-01-2001 | IT | TO990579 A1 | 05-01-2001 |
|  |  |  |  | WO | 0102210 A1 | 11-01-2001 |
|  |  |  |  | EP | 1198365 A1 | 24-04-2002 |
| DE | 2625770 | A | 15-12-1977 | DE | 2625770 A1 | 15-12-1977 |